# EUROPEAN PATENT SPECIFICATION

(11) **EP 1 107 622 B1**
(45) Date of publication and mention of the grant of the patent: **22.03.2006**
(21) Application number: 00308856.4
(22) Date of filing: 09.10.2000
(51) Int. Cl.: H04Q 7/30, H04Q 7/38

(54) **Mobile radio system with synchronised handover**
Mobilfunksystem mit synchronisiertem Weiterreichen (Handover)
Système de radio mobile avec transfer de communication synchronisé

(30) Priority: 10.12.1999 EP 99309986
(43) Date of publication of application: 13.06.2001
(73) Proprietor: LUCENT TECHNOLOGIES INC., Murray Hill, New Jersey 07974-0636 (US)
(72) Inventor: Costa, Mauro, Casteggio 27045, Pavia (IT); Roberts, Michael, Southend-on-Sea, SS2 5EB (GB); Sivagnanasundaram, Sutha, Tooting, SW17 4EJ (GB)
(74) Representative: Sarup, David Alexander

(56) References cited:
- EP-A- 0 676 908
- WO-A-96/38990
- KALLIOKULJU J: "Quality of service management functions in 3/sup rd/ generation mobile telecommunication networks" WCNC. 1999 IEEE WIRELESS COMMUNICATIONS AND NETWORKING CONFERENCE (CAT. NO.99TH8466), WCNC. 1999 IEEE WIRELESS COMMUNICATIONS AND NETWORKING CONFERENCE, NEW ORLEANS, LA, USA, 21-24 SEPT. 1999, pages 1283-1287 vol.3, XP002163144 1999, Piscataway, NJ, USA, IEEE, USA ISBN: 0-7803-5668-3

## Description

This invention relates to a mobile radio telecommunications system, such as a Universal Mobile Telephone System or the Global System for Mobile Communications, and relates especially to a system providing real time services.

In a real time service, it is important that uplink packets, that is packets passing to a mobile system from the control network, are neither duplicated nor lost. If a packet is duplicated, then the upper control layers must deduce which packet to discard; if a packet is lost, it must be retransmitted and if retransmission is imperative, this is usually carried out in the application layer and the retransmission requires radio resource.

Some real time services, such as video, are delay-sensitive and/or loss sensitive. Packet loss and packet duplication can seriously affect the ability to provide such services. Packet loss and packet duplication are especially likely to be experienced during a handover or relocation from one control network to another as the mobile user moves on the ground.

In this specification, the terms "handover" and "relocation", which mean the transfer of control of a connection from a serving Radio Network Controller (RNC) to a target RNC, are used interchangeably.

In a mobile radio telecommunications system it is at present not possible to avoid packet loss or packet duplication during handover or relocation.

It is an object of the invention to provide a system in which the risk of packet loss or packet duplication during handover is substantially reduced.

International patent publication WO 96/38990 and European patent publication EP-A-0676908 relate to synchronisation in handover. It is known from EP-A-0676908 to provide a method of handing over control of communications with a mobile from a serving controller to a target controller in a mobile radio telecommunications system, comprising the steps of the serving controller sending timing information to the target controller, the target controller coming into user plane synchronisation with the serving controller for this mobile connection, and the target controller taking control of communications with the mobile.

The present invention provides a method of handing over control of communications with a mobile terminal from a serving controller to a target controller in a Universal Mobile Telecommunications System (UMTS) mobile telecommunications system,
the target controller being a target radio network controller,
the serving controller being a serving radio network controller,
the method comprising the steps of:-
the target controller sending to the serving controller a request for timing information over an IuR link between the controllers,
the serving controller sending timing information to the target controller over said IuR link,
the target controller coming into user plane synchronisation with the serving controller for the connection with this mobile terminal,
the serving controller and the target controller sending synchronously to a core network the same packet from the mobile, the core network determining which packets are repeated and suppressing the repetition, and
the target controller taking control of communications with the mobile.

The present invention also provides A Universal Mobile Telecommunications System (UMTS) mobile telecommunications system, comprising control of communications hand over means comprising a serving radio network controller and a target radio network controller,
the target controller comprising means to send to the serving controller a request for timing information over an IuR link between the controllers
the serving controller comprising means to respond to said request by sending timing information to the target controller over said IuR link,
the target controller being operative to come into user plane synchronisation with the serving controller which is in connection with a mobile terminal,
the serving controller and the target controller each comprising means to send synchronously to a core network the same packet from the mobile, the core network comprising means to determine which packets are repeated and means to suppress the repetition, and
the target control comprising means to take control of the communications with the mobile.

The invention will be described by way of example only with reference to the accompanying drawing in which :-
Figure 1 illustrates schematically a part of the Universal Mobile Telephone System;
Figure 2 illustrates the signalling control flow during handover; and
Figure 3 illustrates the counting of frames.

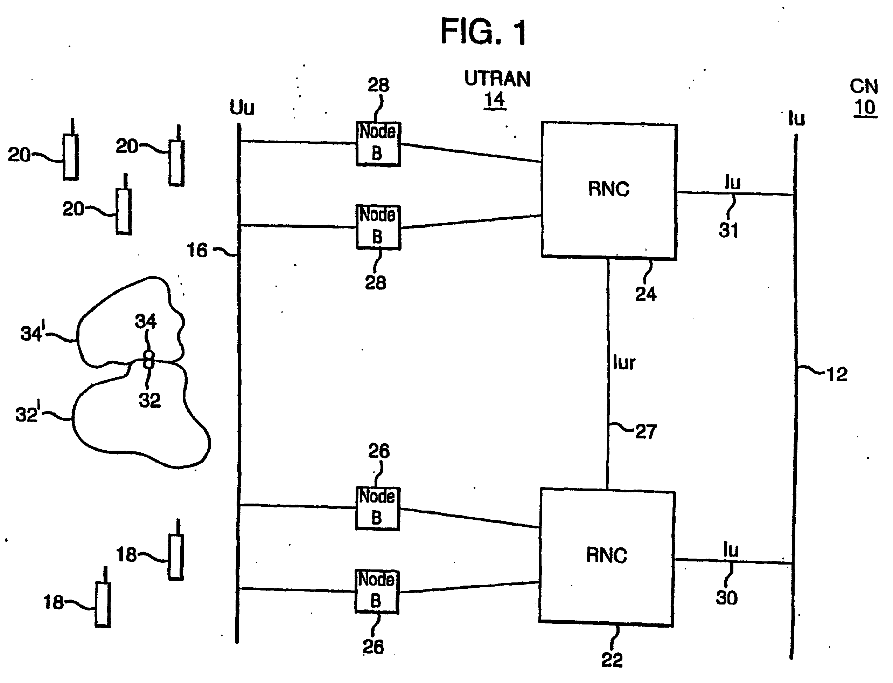

In Figure 1,a Core Network (CN) 10 has an interface 12, the Iu interface, to the UMTS Terrestrial Radio Access Network (UTRAN) 14, and the UTRAN 14 has an interface 16, the Uu interface, to a number of Mobile Systems (MSs) 18, 20.

Within the UTRAN 14 are a number of Radio Network Controllers (RNC) 22, 24, two only being illustrated, each RNC controlling a number of Node Bs 26, 28, two only being shown for each RNC. RNC 22 controls the MSs 18 and RNC 24 controls the MSs 20. The RNCs 22, 24 are connected to each other by an interface Iur 26 and to the Core Network 10 by Iu interfaces 30,31.

In the Figure, the network is the UMTS network; in a GSM network the equivalent building block to an RNC is termed a Base Station Controller (BSC); a Node B is termed a Base Transceiver Station (BTS); and the Uu interface is termed the radio interface.

The RMCs 22, 24 build frames containing data, send the frames to a Node B 26, 28 and control a mobile system as it moves over the ground. A Node B receives frames from an RNC, and modulates the data for passage to the radio interface Uu 16 and thence to a mobile.

The UMTS is specified to have a control plane and a user plane; the control plane provides control signalling between Node Bs and RNCs, to control the allocation of requests for resources, and to control handover requests. The user plane is responsible for handling the actual user data passed between applications.

Suppose one of the mobiles is located in a telecommunications cell 32 just within the group of cells 32' controlled by the RNC 22, and moves into a telecommunications cell 34 located just within the group of cells 34' controlled by the RNC 24. At the position illustrated, the mobile, whether in cell 32 or in cell 34, can receive signals from and send signals to either RNC 22 or RNC 24, via the relevant Node B 26 or 28.

Suppose the mobile is moving upwards in the figure. As it moves and a handover occurs from RNC 22 to RNC 24, it is essential to synchronise the frames if real time services are to be supported such that no duplication of data is detected by the application. At present, handover information is passed from the serving controller (SRNC) 22 to the target controller (TRNC) 24 via the CN 10; SRNC 22 sends a "handover required" signal over Iu link 30 to CN 10 which sends a "handover request" signal to TRNC 24 over Iu link 31; TRNC returns a handover request acknowledgement 35, and the CN 10 performs a handover. With frames now passing via RNC 24, synchronisation is eventually reached, but there is often a noticeable loss or duplication of packets which is perceived by the application and causes noticeable disturbance to the application, for example, in a video, a loss of synchronisation and/or a jittering display.

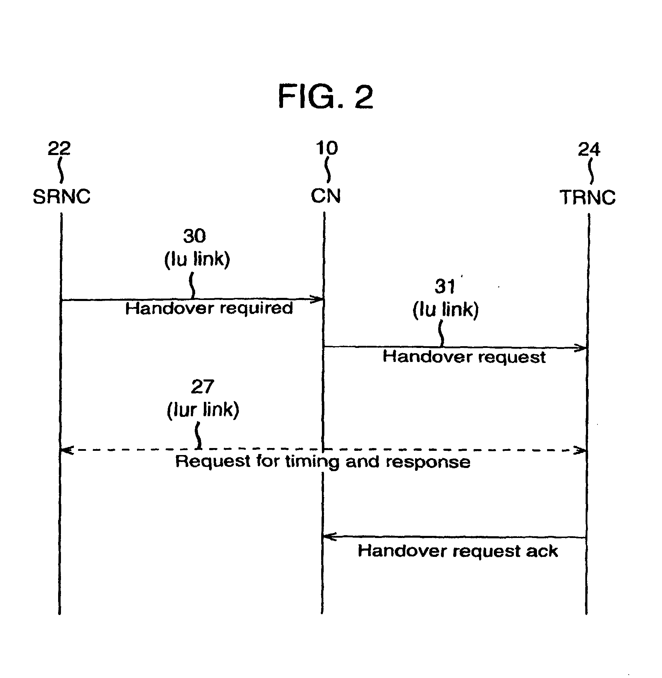

In the preferred method of the invention, when the TRNC 24 receives the handover request signal from the CN 10, it sends over the Iur link 27 a request for timing information from the SRNC 22 related to its frames ; the SRNC 22 then sends over the link Iur 27 its low layer timing and synchronisation and protocol; provisioning timing offset; and synchronisation information. The signals are illustrated in Figure 2.

Once synchronisation information is exchanged, the two RNCs 22, 24 are able to send synchronously the same packet from the mobile in cell 32/34 on the Iu interface links 30,31 to the CN 10. The TRNC 24 sends the Handover Request Acknowledgement signal. The CN 10 can then permit the handover or relocation to RNC 24.

During the handover or relocation, the CN 10 is able to determine which packets are being repeated, and to suppress the repetition.

The signals send over the Iur link 27 maybe out-of-band, but for minimum delay, in-band signalling is preferred.

It is to be understood that lur link is at present used by the SRNC 22 to send a request to the TRNC 24; in the inventive method, the TRNC 24 sends a request in the opposite direction to that conventionally used, and considerable additional information is then sent over the link.

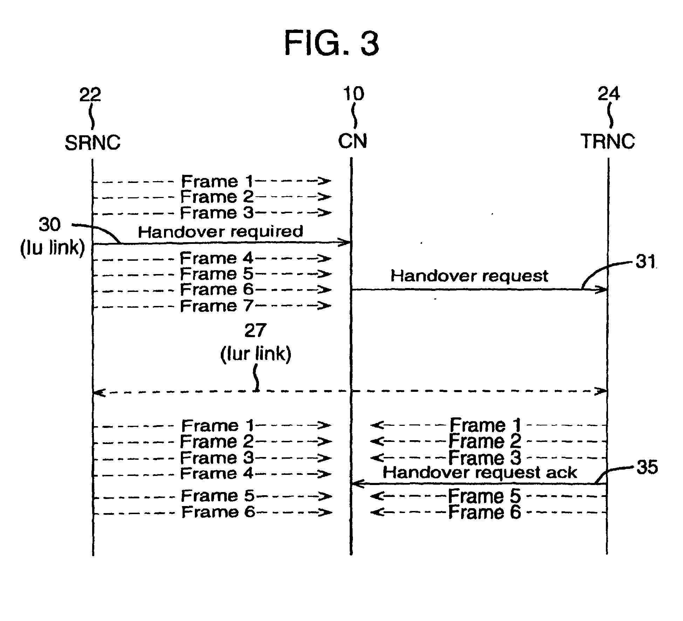

Figure 3 shows the counting of Iu frames in the user plane and indicates the signal paths.

The SRNC 22 sends frames, shown chain-dotted, to the CN 10 via the Iu uplink user plane; the SRNC also sends the "handover required" signal to the CN via Iu signalling, shown by a full line. The CN sends the "handover request" signal to the TRNC via Iu signalling (full line) 31.

The low level timing and synchronisation of the Iu signals are sent via the Iur link 27, shown dotted. The TRNC changes its timing for the mobile in cell 32/34 only to come into synchronisation with the SRNC.

Subsequently the SRNC and the TRNC both send frames from the mobile in cell 32/34; it will be seen from Figure 3 that frames 1 and 2 are not synchronised; frames 3 are synchronised, and the TRNC can then send its "handover request acknowledgement" signal 35 to the CN via Iu signalling (full line). Frames 5 and 6 are shown to be synchronised, and sent by both RNCs. The CN 10 prevents repetition of the information.

The preferred method of the invention, of sequencing/synchronisation on the Iu interface, allows the CN 10 to perform near lossless switching between two uplink packet streams. Quality of Service on handover is greatly improved.

The inventive method can be applied to relocation as well as to RNC handover, and can be applied to GSM as well as to UMTS.

As is conventional, the CN 10 comprises at least one Mobile Switching Centre (MSC) and a plurality of GSM Support Nodes, one of which will be the Serving GSM Support Node (SGSN) for a call in progress.

## Claims

1. A method of handing over control of communications with a mobile terminal from a serving controller (22) to a target controller (24) in a Universal Mobile Telecommunications System, UMTS, mobile telecommunications system,
the target controller being a target radio network controller (24),
the serving controller being a serving radio network controller,
the method comprising the steps of:
the target controller sending to the serving controller a request for timing information over an IuR link (27) between the controllers,
the serving controller sending timing information to the target controller over said IuR link (27),
the target controller coming into user plane synchronisation with the serving controller for the connection with this mobile terminal,
the serving controller (22) and the target controller (24) sending synchronously to a core network the same packet from the mobile, the core network determining which packets are repeated and suppressing the repetition, and
the target controller taking control of communications with the mobile.

2. A method according to claim 1 in which the serving controller (22) sends to the target controller (24) frame information relating to packets on the uplink.

3. A method according to claim 2 in which the frame information is low layer timing and synchronisation protocol, provisioning timing offset, and synchronisation information.

4. A method according to any preceding claim in which the target and serving controllers come into synchroriisation on their Iu interface (12) with the core network (10) of the system.

5. A Universal Mobile Telecommunications System, UMTS, mobile telecommunications system, comprising control of communications hand over means comprising a serving radio network controller (22) and a target radio network controller (24),
the target controller (24) comprising means to send to the serving controller (22) a request for timing information over an IuR link (27) between the controllers (22,24)
the serving controller (22) comprising means to respond to said request by sending timing information to the target controller (24) over said IuR link (27),
the target controller (24) being operative to come into user plane synchronisation with the serving controller (22) which is in connection with a mobile terminal,
the serving controller (22) and the target controller (24) each comprising means to send synchronously to a core network the same packet from the mobile, the core network comprising means to determine which packets are repeated and means to suppress the repetition, and
the target control comprising means to take control of the communications with the mobile.

6. A system according to claim 5, in which the means to respond of the serving controller (22) sends to the target controller (24) timing information relating to packets on the uplink.

7. A system according to claim 5 or claim 6 comprising means to bring the system into synchronisation on the Iu interface (31) with a core network (10).

## Revendications

1. Procédé de transfert de contrôle de communications avec un terminal mobile d'un contrôleur de desserte (22) à un contrôleur cible (24) dans un système de télécommunication mobile, UMTS, système universel de télécommunication avec les mobiles,
le contrôleur cible étant un contrôleur de réseau radio cible (24),
le contrôleur de desserte étant un contrôleur de réseau radio de desserte,
le procédé comprenant les étapes consistant pour :
le contrôleur cible à envoyer au contrôleur de desserte une demande pour des informations de temporisation sur une liaison IuR (27) entre les contrôleurs,
le contrôleur de desserte à envoyer des informations de temporisation au contrôleur cible sur ladite liaison IuR (27),
le contrôleur cible à entrer en synchronisation de plan d'utilisateur avec le contrôleur de desserte pour la connexion avec ce terminal mobile,
le contrôleur de desserte (22) et le contrôleur cible (24) à envoyer de manière synchrone à un réseau d'infrastructures le même paquet à partir du mobile, le réseau d'infrastructures déterminant quels paquets sont répétés et supprimant la répétition, et
le contrôleur cible à prendre le contrôle des communications avec le mobile.

2. Procédé selon la revendication 1 dans lequel le contrôleur de desserte (22) envoie au contrôleur cible (24) des informations de trame concernant des paquets sur la liaison montante.

3. Procédé selon la revendication 2 dans lequel les informations de trame sont le protocole de temporisation et de synchronisation de couche basse, fournissant du décalage de temporisation, et des informations de synchronisation.

4. Procédé selon l'une quelconque des revendications précédentes dans lequel les contrôleurs cible et de desserte entrent en synchronisation sur leur interface Iu (12) avec le réseau d'infrastructures (10) du système.

5. Système de télécommunications mobile, UMTS, système universel de télécommunication avec les mobiles, comprenant le contrôle de moyens de transfert de communication comprenant un contrôleur de réseau radio de desserte (22) et un contrôleur de réseau radio cible (24),
le contrôleur cible (24) comprenant des moyens pour envoyer au contrôleur de desserte (22) une demande pour des informations de temporisation sur une liaison IuR (27) entre les contrôleurs (22, 24)
le contrôleur de desserte (22) comprenant des moyens pour répondre à ladite demande en envoyant des informations de temporisation au contrôleur cible (24) sur ladite liaison IuR (27),
le contrôleur cible (24) étant opérationnel pour entrer en synchronisation de plan d'utilisateur avec le contrôleur de desserte (22) qui est en relation avec un terminal mobile,
le contrôleur de desserte (22) et le contrôleur cible (24) comprenant chacun des moyens pour envoyer de manière synchrone à un réseau d'infrastructures le même paquet à partir du mobile, le réseau d'infrastructures comprenant des moyens pour déterminer quels paquets sont répétés et des moyens pour supprimer la répétition, et
le contrôleur cible comprenant des moyens pour prendre le contrôle des communications avec le mobile.

6. Système selon la revendication 5, dans lequel les moyens pour répondre du contrôleur de desserte (22) envoient au contrôleur cible (24) des informations de temporisation concernant des paquets sur la liaison montante.

7. Système selon la revendication 5 ou la revendication 6 comprenant des moyens pour amener le système en synchronisation sur l'interface Iu (31) avec un réseau d'infrastructures (10).

## Patentansprüche

1. Verfahren zum Weiterreichen der Steuerung von Kommunikationen mit einem mobilen Endgerät von einer bedienenden Steuerung (22) zu einer Zielsteuerung (24) in einem mobilen UMTS-Telekommunikationssystem (Universal Mobile Telecommunications System), wobei
die Zielsteuerung eine Ziel-Funknetzsteuerung (24) ist,
die bedienende Steuerung eine bedienende Funknetzsteuerung ist,
mit folgenden Schritten:
Senden einer Anforderung von Taktinformationen durch die Zielsteuerung zu der bedienenden Steuerung über eine IuR-Strecke (27) zwischen den Steuerungen, wobei die bedienende Steuerung Taktinformationen zur Zielsteuerung über die IuR-Strecke (27) sendet,
wobei die Zielsteuerung Synchronisation mit der bedienenden Steuerung auf Benutzerebene für die Verbindung mit diesem mobilen Endgerät erlangt,
wobei die bedienende Steuerung (22) und die Zielsteuerung (24) das gleiche Paket von dem Mobilgerät synchron zu einem Kernnetz senden, das bestimmt, welche Pakete wiederholt werden, und die Wiederholung unterdrückt, und
die Zielsteuerung die Steuerung von Kommunikationen mit dem Mobilgerät übernimmt.

2. Verfahren nach Anspruch 1, wobei die bedienende Steuerung (22) Rahmeninformationen bezüglich Paketen auf der Aufwärtsstrecke zu der Zielsteuerung (24) sendet.

3. Verfahren nach Anspruch 2, wobei die Rahmeninformationen Takt- und Synchronisationsprotokoll auf niedriger Schicht sind, die Taktversatz und Synchronisationsinformationen beschaffen.

4. Verfahren nach einem beliebigen vorhergehenden Anspruch, wobei die Ziel- und bedienende Steuerung an ihrer IU-Schnittstelle (12) mit dem Kernnetz (10) des Systems in Synchronisation gelangen.

5. Mobiles UMTS-Telekommunikationssystem (Universal Mobile Telecommunications System) mit Mitteln zum Weiterreichen der Steuerung der Kommunikation mit einer bedienenden Funknetzsteuerung (22) und einer Ziel-Funknetzsteuerung (24),
wobei die Zielsteuerung (24) Mittel zum Senden einer Anforderung nach Taktinformationen zu der bedienenden Steuerung (22) über eine IuR-Strecke (27) zwischen den Steuerungen (22, 24) sendet,
wobei die bedienende Steuerung (22) Mittel zum Reagieren auf diese Anforderung durch Senden von Taktinformationen zu der Zielsteuerung (24) über diese IuR-Strecke (27) umfaßt,
wobei die Zielsteuerung (24) die Synchronisation mit der bedienenden Steuerung (22), die in Verbindung mit einem mobilen Endgerät steht, auf der Benutzerebene erlangt,
wobei die bedienende Steuerung (22) und die Zielsteuerung (24) jeweils Mittel zum synchronen Senden des gleichen Pakets von dem Mobilgerät zu einem Kernnetz umfassen, wobei das Kernnetz Mittel umfaßt, um zu bestimmen, welche Pakete wiederholt werden, und Mittel zum Unterdrücken der Wiederholung, und
wobei die Zielsteuerung Mittel umfaßt, um die Steuerung der Kommunikationen mit dem Mobilgerät zu übernehmen.

6. System nach Anspruch 5, wobei die Mittel zum Reagieren auf die bedienende Steuerung (22) Taktinformationen bezüglich der Pakete auf der Aufwärtsstrecke zur Zielsteuerung (24) senden.

7. System nach Anspruch 5 oder Anspruch 6 mit Mitteln, um das System an der IU-Schnittstelle (31) mit einem Kernnetz (10) in Synchronisation zu bringen.
